# EUROPÄISCHE PATENTANMELDUNG

(11) **EP 1 950 399 A1**
(43) Veröffentlichungstag der Anmeldung: **30.07.2008**
(21) Anmeldenummer: 07001533.4
(22) Anmeldetag: 24.01.2007
(51) Int. Cl.: F02D 41/24, F02D 41/26, G05B 19/00, H04L 12/00

(54) **System mit Verbraucherabzweigen**

(71) Anmelder: SIEMENS AKTIENGESELLSCHAFT, 80333 München (DE)
(72) Erfinder: Indefrey, Klaus, 90489 Nürnberg (DE); Neumann, Bernhard, 90556 Cadolzburg (DE); Schumann, Gordon, 91052 Erlangen (DE)

(57) **Zusammenfassung**

Die Erfindung betrifft ein System mit Verbraucherabzweigen (1) bzw. ein Verfahren zum Schutz und/oder zur Steuerung von Verbrauchern, insbesondere Motoren, wobei jeder der Verbraucherabzweige (1) erste Mittel (3) zur Datenerfassung/-eingabe/-ausgabe und zweite Mittel (4) zur Datenübertragung aufweist. Mindestens ein Datenverarbeitungsmittel (2) ist zur zentralen Verarbeitung der von den Verbraucherabzweigen (1) erfassten Daten im System vorgesehen, wobei das Datenverarbeitungsmittel (2) und die Verbraucherabzweige (1) getrennt in Betrieb setzbar sind. Das System bzw. Verfahren ist oft in Einschubtechnik zu verwenden. Dementsprechend benötigen die im Verbraucherabzweig (Z.B. Einschub) (1) belassenen Geräte dann kaum noch Rechenleistung für die Datenverarbeitung. Dies macht kleinere und günstigere Verbraucherabzweige (1) und damit einen günstigeren Schaltschrank möglich.

## Beschreibung

Die Erfindung betrifft ein System mit Verbraucherabzweigen bzw. ein Verfahren zum Schutz und/oder zur Steuerung von Verbrauchern, die insbesondere Motoren sind.

Heutige Motormanagement-Systeme oder Motorschutz- und Steuergeräte, wie z.B. Simocode, werden typischerweise mindestens einmal pro Motor bzw. Abzweig eingesetzt. D.h. in jedem Motorabzweig kommt immer mindestens ein Motorschutz- und Steuergerät pro Verbraucher zum Einsatz. Diese Motorschutz- und Steuergeräte werden typischerweise in Schaltschränken verbaut wobei häufig die so genannte Einschubtechnik zur Anwendung kommt.

Hierbei umfasst ein solches Motormanagement-System oder Motorschutz- und Steuergerät funktionell im Wesentlichen drei verschiedenen Funktionseinheiten. Erfassungs-/Ein-/Ausgabeeinheit, Verarbeitungseinheit und bei kommunikationsfähigen Motorschutz- und Steuergeräten optional die Kommunikationseinheit.

Das Konzept solcher Managementsysteme oder Schutz- und Steuergeräte sieht immer vor, die Kommunikation, Verarbeitung und Erfassung/Ein-/Ausgabe einmal pro Verbraucher, meist gebündelt als ein Gerät, bspw. in einem Einschub eines Schaltschranks aufzubauen. D.h. für mehrere Verbraucher werden diese genannten Funktionseinheiten auch mehrfach z.B. pro Schaltschrank eingesetzt. Da mit zunehmenden Automatisierungsgrad immer mehr Verbraucher, insbesondere Motoren, an übergeordnete Automatisierungssysteme angebunden werden müssen, ergeben sich aus dieser Aufbauweise jedoch diverse Nachteile: Alle drei der hier aufgeführten Funktionseinheiten werden einmal pro Verbraucher bzw. Verbraucherabzweig benötigt, was entsprechende Anforderungen an die notwendigen Ressourcen und an die Rechenleistung des im Schaltschrank verbauten Motorschutz- und Steuergeräte stellt. Eine hohe Rechenleistung und viele Ressourcen haben direkten Einfluss auf die Herstellungskosten und die Abmessungen des Motorschutz- und Steuergerätes. Das Motorschutz- und Scheuergerät mit großen Abmessungen bedeutet große Verbraucherabzweige (Einschübe) und damit große und teure Schaltanlagen, weil Platz verschwendet wird. In diesem Fall müssen außerdem leistungsfähige und damit häufig auch störanfällige und teure Bussysteme in den Verbraucherabzweig verlegt werden, obwohl die Leistungsfähigkeit der Bussysteme für die relativ geringe Menge an Daten pro Verbraucherabzweig oder Einschub überdimensioniert ist.

Der Erfindung liegt die Aufgabe zugrunde, einen kostengünstigen Schutz und/oder eine kostengünstige Steuerung für ein Automatisierungssystem mit Verbrauchern, insbesondere Motoren, zu ermöglichen.

Diese Aufgabe wird erfindungsgemäß durch ein System mit den Merkmalen des Patentanspruchs 1 bzw. durch ein Verfahren mit den Merkmalen des Patentanspruchs 7 gelöst. Die abhängigen Ansprüche betreffen vorteilhafte Weiterbildungen und Ausgestaltungen der Erfindung.

Der Erfindung liegt die Aufgabe zugrunde, die Datenverarbeitung mehrerer Verbraucherabzweige nur einmal zentral auszuführen, wobei die Erfassung/Ein-/Ausgabe sowie die Kommunikation aber weiterhin einmal pro Verbraucher z.B. in einem Einschub belassen wird, so dass sich die Verbraucher die höhere Rechenleistung und das Plus an Ressourcen eines zentralen Datenverarbeitungsmittels (z.B. CPU) teilen können. Somit wird ein System mit Verbraucherabzweigen zum Schutz und/oder zur Steuerung von Verbrauchern, insbesondere Motoren eines Automatisierungssytems, vorgesehen, wobei jeder von den Verbraucherabzweigen erste Mittel zur Datenerfassung/-eingabe/-ausgabe und zweite Mittel zur Datenübertragung aufweist. Das System weist mindestens ein Datenverarbeitungsmittel zur zentralen Verarbeitung der von den Verbraucherabzweigen erfassten Daten auf, wobei das zentrale Datenverarbeitungsmittel an ein übergeordnetes Automatisierungssystem angebunden werden kann. An das Datenverarbeitungsmittel werden in der Regel mindestens zwei Verbraucherabzweige angeschlossen, wobei der Anschluss über die zweiten Mittel der mindestens zwei Verbraucherabzweige erfolgen kann. Das Datenverarbeitungsmittel und die Verbraucherabzweige sind getrennt in Betrieb setzbar. D.h., das Datenverarbeitungsmittel ist separat zu den Verbraucherabzweigen in dem System anordenbar und die Datenverarbeitung kann zentral und unabhängig von dem Betrieb des Verbraucherabzweigs erfolgen. Die Verarbeitung von den erfassten Daten erfolgt derart zentral, dass das Datenverarbeitungsmittel mindesten für zwei Verbraucherabzweige verfügbar ist. Dementsprechend benötigen die in den Verbraucherabzweigen belassenen Geräte, die hier die ersten Mittel zur Datenerfassung/-eingabe/-ausgabe und die zweiten Mittel zur Datenübertragung sind, kaum noch Rechenleistung für die Datenverarbeitung. Dies ermöglicht kleinere und günstigere Verbraucherabzweige und damit ein günstigeres System. Dadurch kann ein derartiges System kostengünstiger aufgebaut und an ein Automatisierungssystem, bei dem eine Menge Verbraucher (z.B. Motoren) gebraucht sind, angebunden werden, bei vergleichbar hoher Verfügbarkeit der Verbraucherabzweige.

Gemäß einer vorteilhaften Ausgestaltung der Erfindung werden zur Datenerfassung/-eingabe/-ausgabe mindestens ein elektronischer Sensor und/oder Aktor an die ersten Mittel eines Verbraucherabzweigs angeschlossen. Damit kann der Verbraucherabzweig Daten, z.B. Prozessdaten, erfassen, eingeben bzw. ausgeben. Die Prozessdaten können dem übergeordneten Automatisierungssystem zur Verfügung gestellt werden bzw. können Daten oder Befehle des Automatisierungssystems in den Verbraucherabzweigen ausgeführt bzw. ausgegeben werden.

Gemäß einer anderen vorteilhaften Ausgestaltung der Erfindung können Daten durch die zweiten Mittel zwischen den Verbraucherabzweigen und dem Datenverarbeitungsmittel übertragen werden. Eine zentrale Datenverarbeitung ist daher möglich, wobei die Daten sowohl zwischen den Verbraucherabzweigen als auch zwischen dem Datenverarbeitungsmittel und einzelnen Verbraucherabzweig übertragen und ausgetauscht werden können.

In vorteilhafter Weise weist der Verbraucherabzweig ein Leitungsmittel zur Datenübertragung auf. Die von den ersten Mittel erfassten Daten können dem Datenverarbeitungsmittel über das Leitungsmittel zur Verfügung gestellt werden. Das Leitungsmittel ist üblicherweise ein Bussystem, wobei der Bus nicht unbedingt ein teueres Profibus ist, sondern ein gewöhnlicher Bus, wie z.B. ein CAN-Bus (Controller Area Network) oder ein herstellerspezifisches Bussystem sein kann. Die Datenübertragung bedient den Bus oder das Bussystem mit den zweiten Mitteln zusammen, damit das Datenverarbeitungsmittel mit dem Verbraucherabzweig kommunizieren kann. Der Profibus oder Feldbus wird dann nur zur Datenübertragung zwischen dem Datenverarbeitungsmittel und dem Automatisierungssystem verwendet. Der teuerer Profibus oder Feldbus wird dann aus dem Verbraucherabzweig heraus durch einen preisgünstigeren und störungsresistenteren Bus ersetzt, was einen zusätzlichen Einspareffekt ergibt.

Gemäß einer weiteren vorteilhaften Ausgestaltung der Erfindung wird mindestens ein Datenverarbeitungsmittel in mindestens einen Verbraucherabzweig integriert, wobei die anderen Verbraucherabzweige unverändert bleiben. Der Verbraucherabzweig, bei dem das Datenverarbeitungsmittel integriert ist, kann ein herkömmlicher Verbraucherabzweig sein und mit dem Datenverarbeitungsmittel zusammen in Betrieb gehen. Die anderen Verbraucherabzweige können in diesem Fall weiterhin klein und günstig ausgebildet werden.

Gemäß einer weiteren vorteilhaften Ausgestaltung der Erfindung wird ein oder mehrere Verbraucherabzweige einem Datenverarbeitungsmittel zuordnet. Dabei ist es möglich, dass eine Mehrzahl von Verbraucherabzweigen ein zentrales Datenverarbeitungsmittel benutzt und insgesamt mehrere Datenverarbeitungsmittel im System verbaut sind, oder ausschließlich ein einzelnes Datenverarbeitungsmittel für alle Verbraucherabzweige des Schaltschrankes zur Verfügung steht.

In einer vorteilhaften Weise wird ein Datenverarbeitungsmittel für mindestens zwei Systeme, welche zum Schutz und/oder zur Steuerung von Verbrauchern, insbesondere Motoren, jeweils mindestens zwei Verbraucherabzweige aufweisen, vorgesehen. Der Verbraucherabzweig weist erste Mittel zur Datenerfassung/-eingabe/-ausgabe und zweite Mittel zur Datenübertragung auf. Die Systeme können derart miteinander verbunden, dass die Verarbeitung der für die Systeme notwendigen Daten durch ein gemeinsames Datenverarbeitungsmittel zentral erfolgt, wobei das Datenverarbeitungsmittel die Daten von mindesten zwei Systemen verarbeitet. Dann haben die Systeme nur ein zentrales gemeinsames Datenverarbeitungsmittel.

Weiterhin wird ein Verfahren zum Schutz und/oder Steuerung von Verbrauchern, insbesondere Motoren, vorgesehen, wobei Daten durch Verbraucherabzweige erfasst, eingegeben und/oder ausgegeben werden, und wobei Daten an die Verbraucherabzweige und/oder von den Verbraucherabzweigen übertragen werden. Um eine zentrale Datenverarbeitung zu ermöglichten, erfolgt die Verarbeitung der von den Verbraucherabzweigen erfassten Daten durch ein Datenverarbeitungsmittel derart, dass das Datenverarbeitungsmittel die Daten von mindesten zwei Verbraucherabzweigen verarbeitet.

Nachfolgend wird die Erfindung anhand der in den Figuren dargestellten Ausführungsbeispiele auf Basis von Einschubtechnik näher beschrieben und erläutert. Es zeigen:
- FIG 1: ein herkömmlicher Verbraucherabzweig in Einschubtechnik,
- FIG 2: eine Darstellung eines Schaltschranks mit herkömmlichen Verbraucherabzweig in Einschubtechnik,
- FIG 3: ein erfindungsgemäßer Verbraucherabzweig in Einschubtechnik,
- FIG 4: eine Darstellung eines Schaltschranks mit erfindungsgemäßen Verbraucherabzweigen in Einschubtechnik.

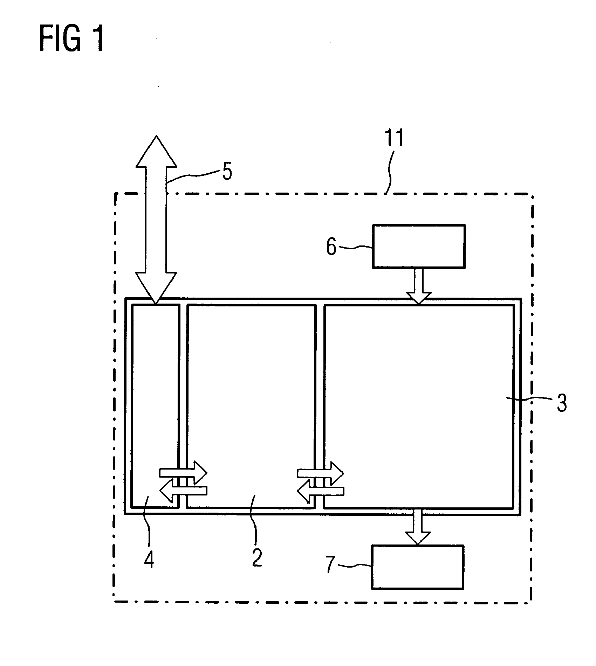

In FIG 1 wird ein herkömmlicher Verbraucherabzweig 11 dargestellt, welcher im Wesentlichen drei verschiedene Funktionseinheiten, Verarbeitungseinheit 2, Erfassung-/Eingabe-/Ausgabeeinheit 3 und Kommunikationseinheit 4, umfasst. Ein derartig ausgestalteter Verbraucherabzweig 11 ist geeignet, insbesondere als ein Einschub 11 für einen Einsatz in einem Schaltschrank zum Schutz, zur Steuerung bzw. zur Überwachung von elektrischen Verbrauchern, z.B. Geräten oder Motoren.

Die Verarbeitungseinheit 2 übernimmt die Datenverarbeitung für den Schutz, die Steuerung und/oder die Überwachung eines Verbrauchers. Die für diese Funktionalität notwendigen Daten und Messwerte erhält die Verarbeitungseinheit 2 von einer ihr zugeordneten Erfassung-/Ein-/Ausgabeeinheit 3.

Bei der Erfassung-/Eingabe-/Ausgabeeinheit 3 handelt es sich im Allgemeinen um verschiedene Arten von Ein-/Ausgängen oder E/A-Baugruppen, an denen einerseits unterschiedliche binäre und analoge Sensoren/Geber (z.B. Stromwandler) 6 und andererseits diverse Arten von Aktoren (z.B. Schütze oder Regelventile) 7 angeschlossen sein können. Die über die angeschlossenen Sensorik 6 und Aktorik 7 gewonnenen Informationen, Daten, Statusinformationen und Messwerte usw. werden in der Verarbeitungseinheit 2 weiterverarbeitet und/oder an eine Kommunikationseinheit 4 übergeben.

Die Kommunikationseinheit 4 führt alle aus dem Verbraucherabzweig 11 bzw. einem Prozess gewonnenen Informationen in geeigneter Form über ein Bussystem 5 nach außen und stellt sie direkt oder indirekt einem übergeordneten Automatisierungssystem zur Verfügung. Es ist wegen der belasteten Datenverarbeitung des Verbraucherabzweigs 11 üblich, dass das Bussystem 5 ein Profibus ist. In der Umkehrung kann das Automatisierungssystem über diesen Weg Informationen und Signale an den Einschub 11 übermitteln.

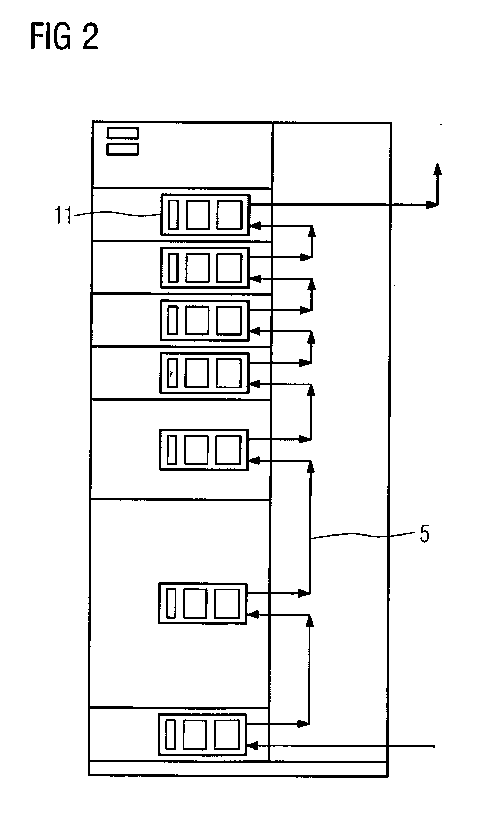

FIG 2 zeigt eine Darstellung eines Schaltschrankes in Einschubtechnik, wobei der in FIG 1 dargestellte Verbraucherabzweig 11 als ein Einschub mehrfach in dem Schaltschrank aufgebaut sind. Die Einschübe 11 werden durch das Bussystem 5 an ein übergeordnetes Automatisierungssystem angebunden. Die Kommunikationseinheit 4 führt alle aus jedem Einschub 11 gewonnenen Informationen in geeigneter Form über das Bussystem 5 nach außen und stellt sie direkt oder indirekt einem übergeordneten Automatisierungssystem zur Verfügung. Die Messwerte, Status- und Zustandsinformationen aller angeschlossenen Verbraucher können über das Bussystem 5 an das übergeordnete Automatisierungssystem übermittelt werden. Andererseits können Daten bzw. Befehle vom Automatisierungssystem über das Bussystem 5 an den Einschub 11 weitergeleitet werden.

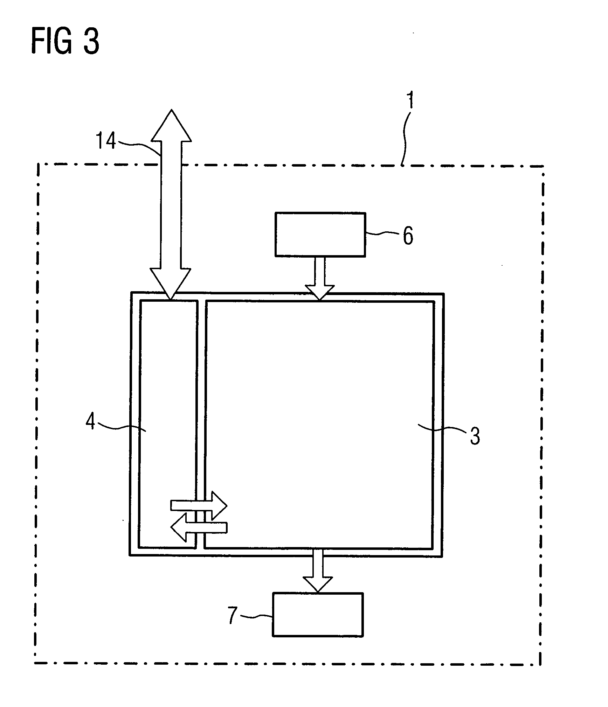

Diejenigen Merkmale der Ausführungsform nach FIG 3, die mit den entsprechenden Merkmalen der Ausführungsform gemäß FIG 1 identisch sind, sind mit denselben Bezugszeichen versehen und werden nicht mehr im Detail erläutert. Wie aus FIG 3 ersichtlich, bleiben die Erfassung-/Eingabe-/Ausgabeeinheit 3 und die Kommunikationseinheit 2 stets im Verbraucherabzweig 1. Dabei werden erfasste Daten nicht im Verbraucherabzweig 1 verarbeitet, sondern durch die Kommunikationseinheit 4 mittels eines herkömmlichen Bussystems 14, wie z.B. eines CAN-Busses, an eine zentrale Verarbeitungseinheit außerhalb des Verbraucherabzweigs 1 übermittelt. Ein derartiger Verbraucherabzweig 1 benötigt dann kaum noch Rechenleistung für Datenverarbeitungen. Dies ermöglicht kleinere und günstigere Verbraucherabzweige 1 und damit ein günstiges Managementsystem (wie z.B. ein Schaltschrank), wo die Verbraucherabzweige 1 aufgebaut sind.

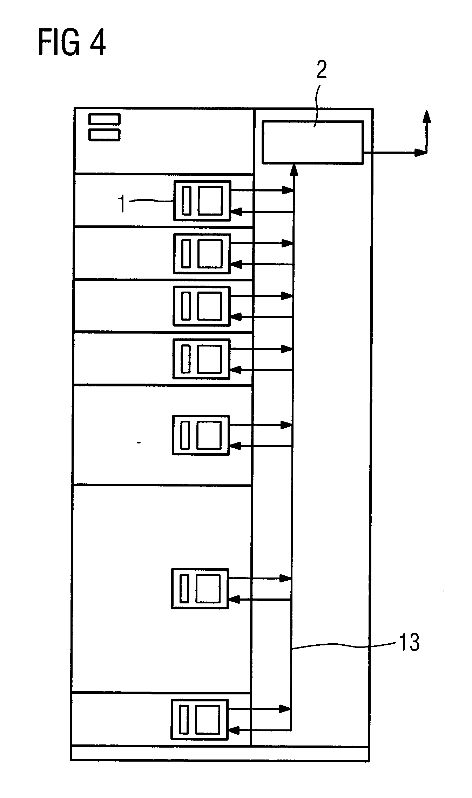

FIG 4 zeigt eine Darstellung eines Schaltschranks mit einer Mehrzahl von den in FIG 3 dargestellten Verbraucherabzweigen 1, wobei solche Verbraucherabzweige 1 ebenfalls als Einschübe in den Schaltschrank eingesetzt werden. Der Schaltschrank weist ein Datenverarbeitungsmittel 2 zur zentralen Verarbeitung der von den Einschüben 1 erfassten Daten auf. Das Datenverarbeitungsmittel 2 kann ein Mikroprozessor, CPU oder etwas vergleichbares sein und ist im Schaltschrank separat zu denjenigen Einschüben 1 angeordnet, wobei die Einschübe 1 jeweils eine Erfassung-/Eingabe-/Ausgabeeinheit 3 und eine Kommunikationseinheit 2 aufweisen und getrennt zu dem Datenverarbeitungsmittel 2 in Betrieb setzbar sind. Zudem wird das Datenverarbeitungsmittel 2 durch ein Bussystem 13 mit jedem Einschub 1 verbunden. Das Bussystem 13 kann ein übliches herstellerspezifisches Bussystem oder ein drahtloses Übertragungsmittel sein. Die von jedem Einschub 1 erfassten Daten können jeweils direkt zu dem Datenverarbeitungsmittel geleitet werden. D.h. alle Einschübe 1 sind dem Datenverarbeitungsmittel 2 zugeordnet. Die gesamte Verarbeitung für alle Einschübe 1 erfolgt zentral in dem Datenverarbeitungsmittel 2. Die Kommunikation zwischen dem Datenverarbeitungsmittel 2 und dem übergeordneten Automatisierungssystem erfolgt durch ein Bussystem 8, z.B. einen Feldbus/Profibus, oder ein anderes geeignetes Mittel zur Datenübertragung z.B. eine drahtlose Technologie.

Darüber hinaus befinden sich die Messwerte, Status- und Zustandsinformationen aller angeschlossenen Einschübe/Verbraucherabzweige 1, gebündelt in einem Gerät - hier das Datenverarbeitungsmittel 2 -, damit die Informationen jedes Einschubs 1 in jedem anderen berücksichtigt werden können. Das bedeutet, dass die Einschübe 1 durch Austausch beliebiger Mengen analoger und binärer Informationen miteinander kommuniziert werden können. Dies ist unabhängig vom übergeordneten Automatisierungssystem und ohne jeglichen zusätzlichen Verdrahtungsaufwand möglich. Es ermöglicht so, Verbraucher bspw. gegeneinander zu verriegeln, was bis jetzt entweder nur durch Hardwareverdrahtung zwischen den Einschüben oder über das Automatisierungssystem möglich war. Wären die Verbraucher Motoren, wären zeitlich aufeinander abgestimmte Motorstarts oder das gezielte Abschalten aller oder ausgewählter Motoren denkbar, auch wenn das Automatisierungssystem oder das Bussystem 8 zwischen zentralen Datenverarbeitungsmittel 2 und übergeordnetem Automatisierungssystem außer Betrieb ist.

Zusätzlich ist es auch möglich, wenn mehrere derartige Schaltschränke miteinander verschaltet sind, dass ihnen nur ein zentrales Datenverarbeitungsmittel 2 zur Verfügung stehen kann. Damit können die Kosten für die Steuerung eines übergeordneten Automatisierungssystems weiterhin reduziert werden.

## Patentansprüche

1. System mit Verbraucherabzweigen (1) zum Schutz und/oder zur Steuerung von Verbrauchern, insbesondere Motoren, wobei jeder von den Verbraucherabzweigen (1) erste Mittel (3) zur Datenerfassung/-eingabe/-ausgabe und zweite Mittel (4) zur Datenübertragung aufweist,
**dadurch gekennzeichnet, dass**
das System mindestens ein Datenverarbeitungsmittel (2) zur zentralen Verarbeitung der von den Verbraucherabzweigen (1) erfassten Daten aufweist, wobei das Datenverarbeitungsmittel (2) getrennt zu den Verbraucherabzweigen (1) in Betrieb setzbar ist.

2. System nach Anspruch 1,
**dadurch gekennzeichnet, dass**
zur Datenerfassung/-eingabe/-ausgabe mindestens ein elektronischer Sensor und/oder Aktor an die ersten Mittel (3) eines Verbraucherabzweigs (1) anschließbar ist.

3. System nach Anspruch 1 oder 2,
**dadurch gekennzeichnet, dass**
Daten durch die zweiten Mittel (4) zwischen den Verbraucherabzweigen (1) und dem Datenverarbeitungsmittel (2) übertragbar sind.

4. System nach einem der Ansprüche 1 bis 3,
**dadurch gekennzeichnet, dass**
der Verbraucherabzweig (1) ein Leitungsmittel (14) zur Datenübertragung aufweist.

5. System nach einem der Ansprüche 1 bis 4,
**dadurch gekennzeichnet, dass**
mindestens ein Datenverarbeitungsmittel (2) in mindestens einen Verbraucherabzweig (1) integrierbar ist.

6. System nach einem der Ansprüche 1 bis 4,
**dadurch gekennzeichnet, dass**
ein oder mehrere Verbraucherabzweige (1) einem Datenverarbeitungsmittel (2) zuordnenbar sind.

7. Verfahren zum Schutz und/oder zur Steuerung von Verbrauchern, insbesondere Motoren, wobei Daten zur Verarbeitung durch Verbraucherabzweige (1) erfasst, eingegeben und/oder ausgegeben werden, und wobei Daten an die Verbraucherabzweige (1) und/oder von den Verbraucherabzweigen (1) übertragen werden,
**dadurch gekennzeichnet, dass**
die Verarbeitung der von den Verbraucherabzweigen (1) erfassten Daten durch mindestens ein Datenverarbeitungsmittel (2) derart zentral erfolgt, dass das Datenverarbeitungsmittel (2) die Daten von mindesten zwei Verbraucherabzweigen (1) verarbeitet.

8. Verfahren nach Anspruch 7,
**dadurch gekennzeichnet, dass**
zur Datenerfassung/-eingabe/-ausgabe für einen Verbraucherabzweig (1) mindestens ein elektronischer Sensor und/oder Aktor angeschlossen wird.

9. Verfahren nach Anspruch 7 oder 8,
**dadurch gekennzeichnet, dass**
Daten zwischen den Verbraucherabzweigen (1) und dem Datenverarbeitungsmittel (2) übertragen werden.

10. Verfahren nach einem der Ansprüche 7 bis 9,
**dadurch gekennzeichnet, dass**
die Daten mittels eines Leitungsmittels (14) an die Verbraucherabzweige (1) und/oder von den Verbraucherabzweigen (1) übertragen werden.

11. Verfahren nach einem der Ansprüche 7 bis 10,
**dadurch gekennzeichnet, dass**
mindestens ein Datenverarbeitungsmittel (2) in mindestens einen Verbraucherabzweig (1) integriert wird.

12. Verfahren nach einem der Ansprüche 7 bis 10,
**dadurch gekennzeichnet, dass**
ein oder mehrere Verbraucherabzweige (1) einem Datenverarbeitungsmittel (2) zugeordnet werden.

13. Verfahren nach einem der Ansprüche 7 bis 12,
**dadurch gekennzeichnet, dass**
das Datenverarbeitungsmittel (2) getrennt zu den Verbraucherabzweigen (1) in Betrieb gesetzt wird.

## Geänderte Patentansprüche

### Geänderte Patentansprüche gemäss Regel 137(2) EPÜ.

**1.** System mit elektrischen Verbraucherabzweigen (1) zum Schutz und/oder zur Steuerung von Verbrauchern, insbesondere Motoren, wobei jeder von den elektrischen Verbraucherabzweigen (1) erste Mittel (3) zur Datenerfassung/-eingabe/-ausgabe und zweite Mittel (4) zur Datenübertragung aufweist,
**dadurch gekennzeichnet, dass**
das System mindestens ein Datenverarbeitungsmittel (2) zur zentralen Verarbeitung der von den elektrischen Verbraucherabzweigen (1) erfassten Daten aufweist, wobei das Datenverarbeitungsmittel (2) getrennt zu den elektrischen Verbraucherabzweigen (1) in Betrieb setzbar und über ein Bussystem (5) an ein Automatisierungssystem anschließbar ist.

**2.** System nach Anspruch 1,
**dadurch gekennzeichnet, dass**
zur Datenerfassung/-eingabe/-ausgabe mindestens ein elektronischer Sensor und/oder Aktor an die ersten Mittel (3) eines elektrischen Verbraucherabzweigs (1) anschließbar ist.

**3.** System nach Anspruch 1 oder 2,
**dadurch gekennzeichnet, dass**
Daten durch die zweiten Mittel (4) zwischen den elektrischen Verbraucherabzweigen (1) und dem Datenverarbeitungsmittel (2) übertragbar sind.

**4.** System nach einem der Ansprüche 1 bis 3,
**dadurch gekennzeichnet, dass**
der elektrische Verbraucherabzweig (1) ein Leitungsmittel (14) zur Datenübertragung aufweist.

**5.** System nach einem der Ansprüche 1 bis 4,
**dadurch gekennzeichnet, dass**
mindestens ein Datenverarbeitungsmittel (2) in mindestens einen elektrischen Verbraucherabzweig (1) integrierbar ist.

**6.** System nach einem der Ansprüche 1 bis 4,
**dadurch gekennzeichnet, dass**
ein oder mehrere elektrische Verbraucherabzweige (1) einem Datenverarbeitungsmittel (2) zuordenbar sind.

**7.** Steuerung, insbesondere Steuergerät, für ein Automatisierungssystem mit Verbrauchern, **dadurch gekennzeichnet, dass**
die Steuerung mindestens ein Datenverarbeitungsmittel (2) zur zentralen Verarbeitung der von elektrischen Verbraucherabzweigen (1) erfassbaren Daten aufweist, wobei das Datenverarbeitungsmittel (2) getrennt zu den elektrischen Verbraucherabzweigen (1) in Betrieb setzbar und über ein Bussystem (5) an ein Automatisierungssystem anschließbar ist.

**8.** Steuerung nach Anspruch 7,
**dadurch gekennzeichnet, dass**
Daten zwischen dem Datenverarbeitungsmittel (2) und den elektrischen Verbraucherabzweigen (1) übertragbar sind.

**9.** Steuerung nach einem der Ansprüche 7 oder 8,
**dadurch gekennzeichnet, dass**
mindestens ein Datenverarbeitungsmittel (2) in mindestens einen elektrischen Verbraucherabzweig (1) integrierbar ist.

**10.** Steuerung nach einem der Ansprüche 7 bis 9,
**dadurch gekennzeichnet, dass**
einem Datenverarbeitungsmittel (2) ein oder mehrere elektrische Verbraucherabzweige (1) zuordenbar sind.

**11.** Verfahren zum Schutz und/oder zur Steuerung von Verbrauchern, insbesondere Motoren, wobei Daten zur Verarbeitung durch elektrische Verbraucherabzweige (1) erfasst, eingegeben und/oder ausgegeben werden, und wobei Daten an die elektrischen Verbraucherabzweige (1) und/oder von den elektrischen Verbraucherabzweigen (1) übertragen werden,
**dadurch gekennzeichnet, dass**
die Verarbeitung der von den elektrischen Verbraucherabzweigen (1) erfassten Daten durch mindestens ein Datenverarbeitungsmittel (2) derart zentral erfolgt, dass das Datenverarbeitungsmittel (2) die Daten von mindestens zwei elektrischen Verbraucherabzweigen (1) verarbeitet und über ein Bussystem (5) an ein Automatisierungssystem anschließbar ist.

**12.** Verfahren nach Anspruch 11,
**dadurch gekennzeichnet, dass**
zur Datenerfassung/-eingabe/-ausgabe für einen elektrischen Verbraucherabzweig (1) mindestens ein elektronischer Sensor und/oder Aktor angeschlossen wird.

**13.** Verfahren nach Anspruch 11 oder 12,
**dadurch gekennzeichnet, dass**
Daten zwischen den elektrischen Verbraucherabzweigen (1) und dem Datenverarbeitungsmittel (2) übertragen werden.

**14.** Verfahren nach einem der Ansprüche 11 bis 13,
**dadurch gekennzeichnet, dass**
die Daten mittels eines Leitungsmittels (14) an die elektrischen Verbraucherabzweige (1) und/oder von den elektrischen Verbraucherabzweigen (1) übertragen werden.

**15.** Verfahren nach einem der Ansprüche 11 bis 14,
**dadurch gekennzeichnet, dass**
mindestens ein Datenverarbeitungsmittel (2) in mindestens einen elektrischen Verbraucherabzweig (1) integriert wird.

**16.** Verfahren nach einem der Ansprüche 11 bis 15,
**dadurch gekennzeichnet, dass**
ein oder mehrere elektrische Verbraucherabzweige (1) einem Datenverarbeitungsmittel (2) zugeordnet werden.

**17.** Verfahren nach einem der Ansprüche 11 bis 16,
**dadurch gekennzeichnet, dass**
das Datenverarbeitungsmittel (2) getrennt zu den elektrischen Verbraucherabzweigen (1) in Betrieb gesetzt wird.
